# EUROPÄISCHE PATENTSCHRIFT

(11) **EP 2 389 511 B1**
(45) Veröffentlichungstag und Bekanntmachung des Hinweises auf die Patenterteilung: **22.05.2013**
(21) Anmeldenummer: 09760813.7
(22) Anmeldetag: 19.11.2009
(51) Int. Cl.: F03D 9/00, H02K 1/27, H02K 7/18, H02K 15/03

(54) **MAGNETRING EINES VIELPOLIGEN GENERATORS EINER WINDENERGIEANLAGE**
MAGNET WHEEL
ROUE MAGNÉTIQUE

(30) Priorität: 23.01.2009 DE 102009006017
(43) Veröffentlichungstag der Anmeldung: 30.11.2011
(73) Patentinhaber: Avantis Ltd., Hong Kong (CN)
(72) Erfinder: BODENSTEIN, Klaus, Hong Kong (CN); LANGE, Detlef, 46147Oberhausen (DE); RUPPRICH, Dieter, 48465 Ohne (DE)
(74) Vertreter: Viering, Jentschura & Partner
(86) Internationale Anmeldenummer: PCT/EP2009/065443
(87) Internationale Veröffentlichungsnummer: WO 2010/083904

(56) Entgegenhaltungen:
- EP-A2- 1 845 604
- WO-A2-2008/116464
- DE-A1- 10 239 366
- ES-A1- 2 233 146

## Beschreibung

Die Erfindung richtet sich auf ein Magnetsystem eines vielpoligen Generators, insbesondere einer Windkraftanlage oder Windenergieanlage, umfassend einen Magnetring mit einem Träger auf dessen Außenumfang oder Innenumfang aneinandergereiht Einzelpermanentmagnete in sich regelmäßig ändernder Polaritätsausrichtung angeordnet sind.

Seit einiger Zeit sind Windkraftanlagen oder Windenergieanlagen neueren Typs in der Entwicklung, bei welchen der Generator integraler Bestandteil der Windradrotornabe ist und hierbei ein innenliegender Stator mit einem Außenläufer zusammenwirkt. Ein solcher Generator ist in der DE 102 39 366 A1 beschrieben. Zur Ausbildung eines solchen Außenläufers müssen an dessen Innenseite eine Vielzahl von Permanentmagneten angeordnet werden. Dies ist insbesondere bei den großen Dimensionen eines Generators einer Windenergieanlage oder einer Windkraftanlage nicht unproblematisch. Die Permanentmagnete weisen eine hohe magnetische Kraft auf und müssen in der Umgebung von Metallen genau platziert werden. Kleine Unachtsamkeiten können dazu führen, dass benachbarte Permanentmagnete sich anziehen und dann nicht mehr voneinander lösbar sind oder sich gemeinsam auch an einem angrenzenden Metall festsetzen, von welchem sie ebenfalls nicht mehr lösbar sind.

Für kleinere Motoren ist in der EP 1 845 604 A2 vorgeschlagen worden, als Montagehilfe eine Trägereinrichtung aus Kunststoff in Form einer rohrförmigen Trägerhülse als verlorenes Hilfsmittel zu verwenden. Außenseitig auf diese Trägerhülse werden die Einzelpermanentmagnete durch Kunststoffsegmente getrennt aufgesetzt und verklebt und dann zusammen mit der Trägerhülse in das Rückschlussrohr oder den Rückschlussring des Außenläufers oder Generators eingeschoben. Anschließend wird die Trägerhülse dann mechanisch durch Ausdrehen bis auf die Oberfläche der Permanentmagnete beseitigt, so dass nur noch die zwischen den Einzelpermanentmagneten bestehenden Kunststoffsegmente stehen bleiben. Ein solches Verfahren ist für kleine Motoren anwendbar, aber nicht bei Generatoren von Windkraftanlagen, die einen Durchmesser von mehreren Metern aufweisen können.

Weiterhin umfasst das Erregersystem eines vielpoligen Generators mehrere Reihen ringförmig angeordneter Einzelpermanentmagnete, die zur Verminderung von Wirbelstromverlusten entsprechend der axialen Gesamtlänge und somit der Leistung des Generators zur Ausbildung eines Magnetsystems zu einem Magnetrad zusammengesetzt sind. Dieses Magnetrad weist entlang seines Umfangs mehrere Magnetsegmente mit wechselnder Polaritätsausrichtung auf, so dass in der Zusammenbauposition der einzelnen Magnetringe zu dem Magnetrad gleichpolig ausgerichtete Magnetsegmente benachbarter Reihen eine abstoßende Kraftwirkung aufeinander ausüben. Die benachbarten Reihen der ringförmig angeordneten Einzelpermanentmagnete haben zusätzlich infolge der Magnetkräfte das Bestreben, sich auf eine stabile Nord-Süd-Position auszurichten und zeigen somit die Tendenz, sich gegeneinander zu verdrehen. Daher erfordert die Herstellung eines solchen Magnetsystems mit einem aus mehreren Reihen ringförmig angeordneter Einzelpermanentmagnete hergestellten Magnetrad und insbesondere die genaue Ausrichtung der einzelnen Magnetreihen zueinander einen hohen Fertigungsaufwand.

Ein aus mehreren Magnetringen zusammengesetztes Magnetsystem eines vielpoligen Generators einer Windenergieanlage ist aus der ES 2 233 146 A1 bekannt. Dieses Dokument offenbart ein Magnetsystem, das einen Magnetring mit einem Träger umfasst, wobei auf dem Außenumfang des Trägers aneinandergereiht Einzelpermanentmagnete in sich regelmäßig ändernder Polaritätsausrichtung angeordnet sind. Mehrere Magnetringe sind seitlich in axialer Richtung koaxial aneinanderliegend zu einem Magnetrad zusammengefügt. Hierbei ist lediglich ein Träger vorgesehen, auf dem die jeweils ein Magnetrad ausbildenden einzelnen Magnete nebeneinander angeordnet sind.

Der Erfindung liegt die Aufgabe zugrunde, eine Montagemöglichkeit bereitzustellen, die es ermöglicht in montagemäßig einfacher und günstiger Art und Weise einen Außenläufer oder einen Innenläufer eines Generators einer Windkraftanlage mit einer Vielzahl von nahe beieinander angeordneten Einzelpermanentmagneten auszustatten.

Bei einem Magnetsystem der eingangs bezeichneten Art wird diese Aufgabe dadurch gelöst, dass mehrere Magnetringe seitlich in axialer Richtung koaxial aneinander anliegend zu einem Magnetrad zusammengefügt sind, wobei der Träger in jeder seiner Seitenflächen in regelmäßigen oder unregelmäßigen Winkelabständen entlang seines Umfangs oder die Halteelemente Führungslöcher oder Führungsbohrungen aufweist/aufweisen, in die jeweils ein Führungselement mit einem ersten Führungsabschnitt eingesetzt ist, wobei ein zweiter Führungsabschnitt des jeweiligen Führungselements in ein korrespondierendes Führungsloch eines benachbarten Magnetrings eingesetzt ist. Mit Hilfe der Führungselemente sind somit benachbarte Magnetringe aufschichtbar und exakt zueinander ausrichtbar anzuordnen.

Um aus den Einzelmagneten insgesamt ein Magnetrad herstellen zu können, das der Auslegung des Generators entsprechend die notwendige Anzahl an Einzelpermanentmagneten zur Verfügung stellt, zeichnet sich die einfache Montagemethode oder einfache Montagemöglichkeit gemäß der Erfindung also dadurch aus, dass einzelne Magnetringe durch Aufeinanderstapeln zu dem Magnetrad zusammengesetzt werden.

Mit der Erfindung wird auf einfache und kostengünstige Weise auch eine Möglichkeit bereitgestellt, mittels welcher der Zusammenbau eines aus mehreren aufeinander gestapelten Magnetringen bestehenden Magnetrades unter Einhaltung einer vorgegebenen Ausrichtung der Einzelpermanentmagnete und der Magnetsegmente benachbarter Magnetringe zueinander möglich ist. Dadurch, dass Führungselemente in Führungslöchern von zueinander benachbarten Magnetringen eingesetzt werden, wird die Ausrichtung der Magnetringe zu- und untereinander gewährleistet. Eine Aufbringung einer radialen Kraftkomponente ist beim Zusammenbau der einzelnen Magnetringe nicht erforderlich, weil die Führungselemente ein Verdrehen der Magnetringe unterbinden. Es reicht allein eine axiale Kraftkomponente beim Zusammenbau aus, die der Magnetkraft der einzelnen sich gegeneinander abstoßenden Einzelpermanentmagnete oder Magnetsegmente entgegen wirkt, weil die benachbart zueinander angeordneten Magnetringe mittels der Führungselemente aufeinander ausgerichtet sind und aufgrund dieser Führung eine Fehlausrichtung der Magnetringe untereinander nicht möglich ist.

Zur Steigerung der Belastbarkeit und der Dauerfestigkeit des Magnetsystems sind in weiterer Ausgestaltung der Erfindung benachbarte Magnetringe mittels einer stoffschlüssigen Verbindung an ihren aneinanderliegenden Seitenflächen miteinander verbunden, wobei sich die stoffschlüssige Verbindung beim Aufeinanderpressen zueinander benachbarter Magnetringe aus einem anaerob härtenden Klebemittel bildet. Während der Herstellung des Magnetrads werden die einzelnen Magnetringe aufeinander gedrückt, wodurch dem Klebemittel Sauerstoff entzogen wird, so dass sich eine hochfeste Verbindung in der Fuge zwischen benachbarten Magnetringen ausbildet.

Bei in Bezug auf das anaerob aushärtende Klebemittel passiven Materialien der miteinander zu verklebenden Seitenflächen der Magnetringe, die keine katalytische Wirkung aufweisen, ist es weiterhin von Vorteil, wenn sich die stoffschlüssige Verbindung beim Aufeinanderpressen benachbarter Magnetringe aus einem anaerob härtenden Klebemittel und einem Aktivator bildet.

Um neben einem Magnetsystem mit parallel zur Magnetsystemachse verlaufenden Magnetsegmenten gleicher Polaritätsausrichtung auch ein Magnetsystem mit räumlich gekrümmten oder schräg zur Magnetsystemachse angeordneten Magnetsegmenten bereitzustellen, sieht die Erfindung in zweckmäßiger Weiterbildung vor, dass die Führungslöcher oder -bohrungen bei allen Magnetringen oder Trägern oder Rückschlussringen an gleicher Umfangsposition oder Winkelposition in Bezug zu längs des Umfangs angeordneten Einzelpermanentmagneten und/oder Magnetsegmenten ausgebildet sind. Hierbei ist es dann weiterhin zweckmäßig, wenn der zweite Führungsabschnitt der Führungselemente seitlich versetzt zu dem ersten Führungsabschnitt ausgebildet ist.

Um die Laufruhe des Generators zu erhöhen und Drehmomentschwankungen sowie das Rastmoment zu reduzieren, sieht die Erfindung in Weiterbildung vor, dass der Versatz zwischen dem ersten Führungsabschnitt und dem zweiten Führungsabschnitt des jeweiligen Führungselements derart ausgebildet ist, dass in der Zusammenbauposition des Magnetrads die Einzelpermanentmagnete und/oder die Magnetsegmente gleicher Polaritätsausrichtung in Bezug auf die Magnetradachse in axialer Richtung von Magnetring zu Magnetring unter einem Winkel von 6° bis 20° im Wesentlichen schräg verlaufend oder treppenförmig versetzt angeordnet sind.

Hierbei kann in Ausgestaltung weiterhin der seitliche Versatz zwischen dem ersten Führungsabschnitt und dem zweiten Führungsabschnitt der Führungselemente im Wesentlichen kleiner sein als ein jeweils von einem Magnetsegment überstrichener Kreisringabschnitt. Diese Maßnahme bewirkt ferner eine höhere Lebensdauer und ein günstigeres elektromechanisches Betriebsverhalten des Generators.

In Ausgestaltung sieht die Erfindung weiterhin vor, dass das Magnetrad aus mehreren, aneinanderliegend aufgeschichteten und mittels der Führungselemente zueinander ausgebildeten Magnetringen zusammengesetzt ist.

Zur Montage der Einzelpermanentmagnete sieht die Erfindung vor, dass die Außen- oder die Innenumfangsfläche der Träger Aufnahmeelemente aufweist, an oder in welchen jeweils ein klammerartiges Halteelement angeordnet ist, wobei jeweils zwei beabstandet zueinander angeordnete Halteelemente zwischen sich einen Einzelpermanentmagneten an dem Träger festhalten und/oder festlegen.

Mit der Erfindung wird somit auf einfache und kostengünstige Weise eine Möglichkeit zur Montage von Einzelpermanentmagneten bereitgestellt, mit welcher diese am Rotor, d.h. am Außenläufer oder Innenläufer, eines Generators einer Windenergieanlage oder Windkraftanlage, angeordnet werden können. Hierbei sieht die Erfindung vom Grundsatz her vor, dass zunächst einzelne Magnetringe hergestellt werden, die dann anschließend zu einem Magnetrad zusammengefügt werden, wobei das Magnetrad dann anschließend in das Polradgehäuse des Generators eingefügt wird.

Zur Herstellung der einzelnen Magnetringe ist ein Klammersystem vorgesehen, bei welchem klammerartige Halteelemente in den Träger, der nachher den Rückschlussring des Rotors bildet, eingesetzt werden und zwischen sich jeweils einen Einzelpermanentmagneten aufnehmen und an dem Träger festhalten. Dies ist eine einfache Montagemöglichkeit, die verhindert, dass die Einzelpermanentmagnete an einer anderen als der vorgesehenen Position miteinander oder mit dem metallischen Rückschlussring oder dem metallischen Träger in anhaftende Verbindung treten. Die Einzelpermanentmagnete lassen sich jeweils auf einfache Art und Weise zwischen zwei Halteelemente von der Seite her einschieben. Die Halteelemente bestehen beispielsweise aus Zinkdruckguss und sorgen für die notwendige mechanische Stabilität der Einzelpermanentmagnete auf dem Träger. Anschließend können die Einzelpermanentmagnete mit einer Klebemasse oder einem Klebemittel vergossen werden, welche(s) dann die notwendige Vibrationsfestigkeit des Magnetringes bzw. der auf einer Kreisbahn angeordneten Einzelpermanentmagnete bewirkt. Hierbei bietet sich insbesondere die Verwendung eines anaeroben Klebemittels an, das auch in kleine Kapillaröffnungen eintritt, so dass hier eine gute Verbindung zwischen den Klammern und den Einzelpermanentmagneten, aber auch zwischen den Einzelpermanentmagneten und dem Träger im Wege einer formschlüssigen Klebstoffverbindung ausgebildet wird. Ein einzelner Einzelpermanentmagnet weist beispielsweise eine Länge von 100 mm auf, wodurch auch die axiale Erstreckung eines einzelnen Magnetringes im Wesentlichen bestimmt ist. Wie sich im Zusammenhang mit den weiteren Unteransprüchen noch ergeben wird, können die Magnete von Magnetring zu Magnetring relativ versetzt zueinander angeordnet sein, so dass durch die Kombination der relativ kleinen Stäbe und die versetzte Anordnung die Wirbelstromverluste vermindert werden.

Vorteilhafte und zweckmäßige Ausgestaltungen und Weiterbildungen der Erfindung ergeben sich aus den Unteransprüchen.

So zeichnet sich die Erfindung weiterhin dadurch aus, dass jedes Halteelement benachbarte Einzelpermanentmagnete mechanisch voneinander trennt und deren unmittelbares Aneinanderliegen verhindert.

Um die gewünschte einfache Montage besonders vorteilhaft realisieren zu können, ist gemäß Weiterbildung der Erfindung auch vorgesehen, dass benachbarte Halteelemente derart beabstandet angeordnet sind und die Einzelpermanentmagnete derart dimensioniert sind, dass jeweils ein Einzelpermanentmagnet seitlich in Axialrichtung des Trägers in den zwischen benachbarten Halteelementen ausgebildeten Zwischenraum einschiebbar ist.

Da die Einzelpermanentmagnete relativ klein ausgebildet sein sollen, bietet es sich an, jeweils mehrere gleichpolig ausgerichtete, nebeneinander angeordnete Einzelpermanentmagnete zu einem Magnetsegment zusammenzufassen, was die Erfindung ebenfalls vorsieht.

Um nicht zu viele Bauteile zu verwenden und ggf. als verlorene Hilfsmittel anschießend wieder beseitigen zu müssen, ist es von weiterem Vorteil, wenn der Träger ein Rückschlussring ist oder ausbildet, was die Erfindung ebenfalls vorsieht.

Ein besonders geeignetes Material, aus dem sich Einzelpermanentmagnete herstellen lassen, sind die Metalle der Seltenen Erden. Die Erfindung zeichnet sich daher weiterhin dadurch aus, dass die Einzelpermanentmagnete aus einem Metall der Seltenen Erden hergestellt sind.

Eine besonders günstige Anordnung und Ausrichtung der Einzelpermanentmagnete in Bezug auf die Magnetradachse lässt sich gemäß weiterer Ausgestaltung der Erfindung dadurch erreichen, dass die Aufnahmeelemente schräg geneigt verlaufend, insbesondere unter einem Winkel von 6° bis 20°, ausgebildet sind.

Schließlich sieht die Erfindung auch noch vor, dass das Magnetrad mittels einer Schrumpf-Klebe-Verbindung stoff-und/oder kraftschlüssig längs einer umlaufenden Aufnahmefläche mit einem Polradgehäuse verbunden ist. Durch diese Maßnahme lässt sich das fertig hergestellte Magnetrad in montagemäßig einfacher und günstiger Art und Weise in eine oder auf eine Aufnahmefläche eines Polradgehäuses aufbringen und dadurch dann das Magnetsystem herstellen, das im Zusammenhang mit einem Generator bei einer Windkraftanlage oder Windenergieanlage Verwendung findet. Die Aufnahmefläche des Polradgehäuses kann sowohl eine innere Umfangsfläche als auch eine auf der Außenseite des Polrades ausgebildete Umfangsfläche sein.

Ein Magnetsystem mit räumlich gekrümmten oder schräg zur Magnetsystemachse verlaufenden Magnetsegmenten lässt sich auch dadurch bereitstellen, dass die in einer Seitenfläche eines jeweiligen Magnetringes ausgebildeten Führungslöcher zu den in einer Seitenfläche eines benachbarten Magnetringes in Bezug zu den rund um den Umfang der Magnetringe angeordneten Magnetsegmenten versetzt ausgebildet sind.

Im Hinblick auf eine Erhöhung der Laufruhe bei gleichzeitiger Reduzierung der Drehmomentschwankungen und des Rastmoments ist es auch möglich, dass der Versatz zwischen den Führungslöchern der beiden zueinander benachbarten Magnetringe derart ausgebildet ist, dass in Zusammenbauposition des Magnetsystems oder des Magnetrads die Magnetsegmente mit gleicher Polaritätsausrichtung der einzelnen Magnetringe in Bezug auf die Magnetringachse in axialer Richtung unter einem Winkel von 6° bis 20° im Wesentlichen schräg verlaufend angeordnet sind.

Die vorstehend beschriebene, vorteilhafte Wirkung kann auch dadurch bewirkt werden, dass der Versatz zwischen den Führungslöchern der beiden zueinander benachbarten Magnetringe derart ausgebildet ist, dass in der Zusammenbauposition des Magnetsystems oder des Magnetrads die Magnetsegmente mit gleicher Polaritätsausrichtung der einzelnen Magnetringe in Bezug auf die Magnetringachse in axialer Richtung treppenförmig versetzt angeordnet sind und der Versatz zwischen den Führungslöchern der beiden zueinander benachbarten Magnetringe in Umfangsrichtung der Magnetringe im Wesentlichen kleiner ist als ein Kreisabschnitt eines jeweiligen Magnetsegments.

Um die Magnetfeldlinien der einzelnen Magnetsegmente der jeweiligen Magnetringe zu leiten und um das Magnetsystem magnetisch abzuschirmen kann ein Rückschlussring auf dem Außenumfang oder dem Innenumfang der jeweiligen Magnetringe angebracht sein.

Somit ist es erfindungsgemäß möglich, dass die Magnetringe in Zusammenbauposition einen Außenläufer oder einen Innenläufer des Generators der Windenergieanlage bilden.

Da die Magnetsegmente elektrisch leitfähig sind, kommt es in diesen im Betrieb des Generators zu Wirbelstromverlusten. Die Wirbelstromverluste sind umso höher, je größer die Polfläche eines einzelnen Magnetsegments ist. Um diese Wirbelstromverluste zu minimieren, können die einzelnen Magnetsegmente jeweils mehrere, vorzugsweise drei, gleichpolig ausgerichtete Einzelpermanentmagnete aufweisen, die mittels Halteelementen an und/oder in einem Rückschlussring eines jeweiligen Magnetringes befestigt sind. Dadurch entstehen im Wesentlichen keine Lücken zwischen den einzelnen Magnetsegmenten.

Zweckmäßigerweise sind die jeweiligen Einzelpermanentmagnete aus einem Metall der Seltenen Erden hergestellt.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. Die Zeichnung zeigt in:
- Fig. 1: in schematischer Darstellung eine Draufsicht auf einen Magnetring,
- Fig. 2: eine vergrößerte Darstellung des Ausschnittes A aus Fig. 1,
- Fig. 3: eine perspektivisch schematische Darstellung mehrerer Magnetringe vor dem Zusammenbau zu einem Magnetrad,
- Fig. 4: eine schematische Darstellung eines Führungselements,

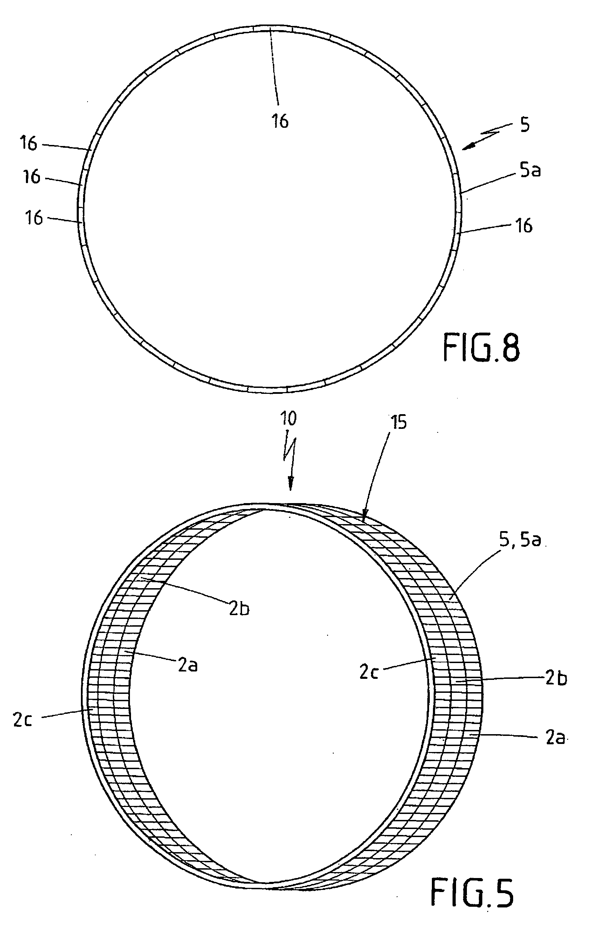

- Fig. 5: in schematischer Perspektivdarstellung ein aus mehreren Magnetringen zusammengesetztes Magnetrad,
- Fig. 6: ein Polradgehäuse mit einer Aufnahmefläche für ein Magnetrad,
- Fig. 7: eine alternative Ausführungsform einer Magnetanordnung in Teilansicht und in
- Fig. 8: einen Rückschlussring.

Eine Windenergieanlage oder Windkraftanlage umfasst im Wesentlichen einen Rotor mit Nabe und Rotorblättern und eine Maschinengondel, die den Generator umgibt. Die Umwandlung der mittels der Rotorblätter erzeugten mechanischen Leistung in elektrische Leistung erfolgt beispielsweise mittels eines vielpoligen Generators, vorzugsweise eines Synchrongenerators, der mit der Drehzahl des Rotors betrieben wird und in der Maschinengondel untergebracht ist. Ein solcher vielpoliger Generator weist einen Ständer oder Stator mit Wicklungen und einen den Ständer umgebenden Läufer oder Rotor (Außenläufer) oder einen vom Ständer umgebenen Läufer oder Rotor (Innenläufer) auf.

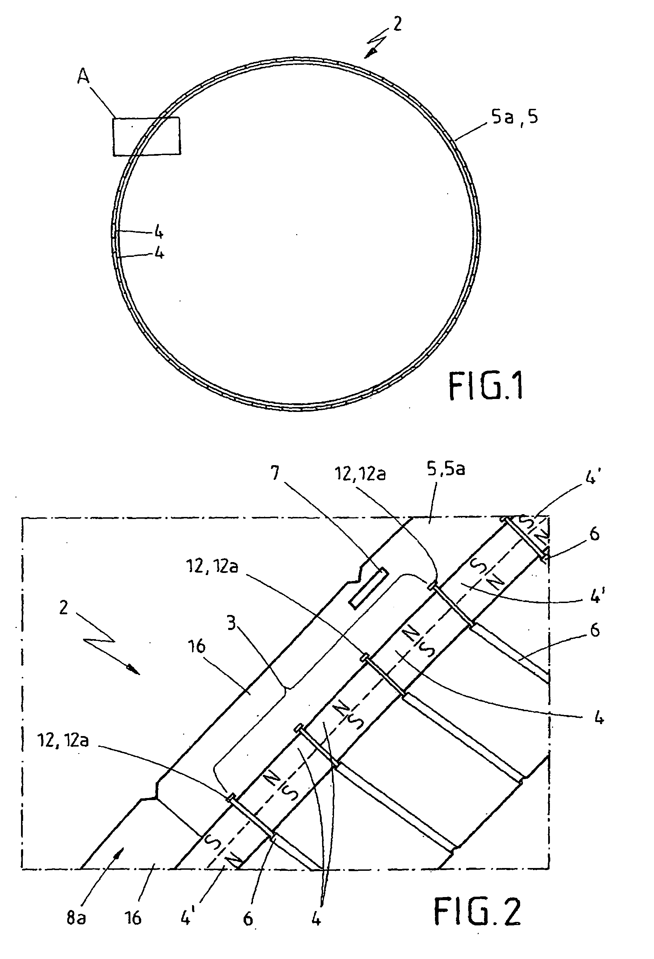

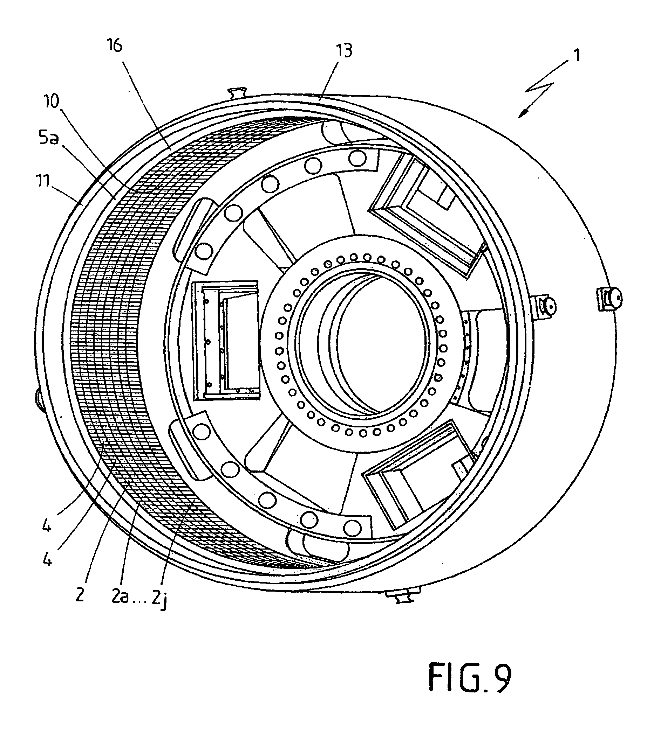

Im Ausführungsbeispiel ist ein Außenläufer dargestellt, der ein in Fig. 9 dargestelltes Magnetsystem 1 ausbildet, das mehrere Magnetringe 2, 2a - 2j, 2', 2a', 2b', 2c' umfasst, die zu einem Magnetrad 10 zusammengesetzt sind, welches innenseitig auf einer Aufnahmefläche 14 in ein Polradgehäuse 11 eingebaut ist. Jeder Magnetring 2, 2a - 2j, 2', 2a', 2b', 2c' weist eine Vielzahl an rund um den Umfang des jeweiligen Magnetringes angeordneten Einzelpermanentmagneten 4, 4' auf, wobei jeweils drei nebeneinander angeordnete und gleichpolig ausgerichtete Einzelpermanentmagnete 4, 4' ein Magnetsegment 3, 3' ausbilden. Die Magnetsegmente 3, 3' ihrerseits sind mit abwechselnder Polaritätsausrichtung nebeneinander angeordnet, wie dies der Fig. 2 zu entnehmen ist. Hierbei sind der Südpol S und der Nordpol N jeweils in radialer Richtung ausgerichtet, so dass abwechselnd in Umfangsrichtung jeweils ein Magnetsegment 3 mit außenliegendem Nordpolbereich und innenliegendem Südpolbereich und ein Magnetsegment 3' mit außenliegendem Südpolbereich und innenliegendem Nordpolbereich aufeinander folgen. Jedes Magnetsegment 3, 3' wiederum besteht aus mehreren Einzelpermanentmagneten 4, 4', die mit jeweils gleich ausgerichteter Polarität längsseitig nebeneinander angeordnet sind, um die Wirbelstromverluste zu reduzieren, die bei großen Polflächen ansonsten sehr hoch wären. Im Ausführungsbeispiel ist ein Magnetsegment 3, 3' jeweils aus drei Einzelpermanentmagneten 4, 4' zusammengesetzt. Denkbar sind aber auch Magnetsegmente 3, 3' mit einer davon abweichenden Anzahl an Einzelpermanentmagneten 4, 4'. Die Einzelpermanentmagnete 4, 4' sind aus einem Metall der Seltenen Erden hergestellt, insbesondere aus einem hochpermeablen gesinterten Metallpulver unter Verwendung dieser Metalle hergestellt.

Zur Leistungsoptimierung eines einen Läufer mit einem Magnetrad 10 aufweisenden Generators sind die Lücken zwischen den benachbarten Einzelpermanentmagneten 4, 4' jeweils möglichst klein gehalten. Zu diesem Zweck sind die Einzelpermanentmagnete 4, 4' innenseitig in einen einen Rückschlussring 5a ausbildenden Träger 5 eingesetzt, wobei der mit den Einzelpermanentmagneten 4, 4' ausgestattete Rückschlussring 5a dann jeweils einen Magnetring 2, 2', 2a' - 2c', 2a - 2j ausbildet.

Der Rückschlussring 5a ist aus einzelnen Metallsegmenten 16 zusammengesetzt, die aneinanderliegend den kreisringförmigen Rückschlussring 5a ausbilden. Die einzelnen Metallsegmente 16 können über Verbindungslaschen miteinander verbunden und miteinander verschweißt sein. Insbesondere werden diese kraftschlüssig dann zusammengepresst, wenn der Rückschlussring 5a mit den darin eingesetzten Einzelpermanentmagneten 4, 4' in das Polradgehäuse 11 eingesetzt und dann längs der Aufnahmefläche 14 bei Erkalten des erwärmten Polradgehäuses 11 zusammengepresst wird, wie dies nachstehend erläutert ist.

Um die einzelnen Einzelpermanentmagnete 4, 4' während der Montage mit einem möglichst geringen Abstand zueinander an dem Rückschlussring 5a anordnen zu können, ist dieser mit Aufnahmeelementen 12 in Form von in axialer Richtung verlaufenden nutenförmigen Schlitzen 12a versehen, die gleichmäßig über seine Innenumfangsfläche verteilt mit einem der Breite eines Einzelpermanentmagneten 4, 4' entsprechenden Abstand ausgebildet sind. In diese nutförmigen Schlitze 12a wird jeweils ein querschnittlich Doppel-T-förmiges Halteelement 6 mit der Funktion einer Klammer eingesetzt. Zwischen jeweils zwei Halteelementen 6 ist dann jeweils ein Einzelpermanentmagnet 4, 4' angeordnet und von den Halteelementen 6 an der Innenseite des Rückschlussrings 5a festgelegt. Hierbei weisen die Halteelemente 6 eine ganz geringe Dickenerstreckung auf, so dass zwischen aneinander angrenzenden Einzelpermanentmagneten 4, 4' lediglich eine äußerst schmale Lücke besteht. Der Rückschlussring 5a weist eine solche Stärke oder Dicke auf, dass auf seiner Außenseite bei auf seiner Innenseite aufgebrachten Einzelpermanentmagneten 4, 4' keine Magnetkraft mehr feststellbar ist, und somit keine Magnetkraft nach außen wirkt. Zur Herstellung des Rückschlussringes 5a oder der Metallsegmente 16 wird vorzugsweise ein Stahlmaterial mit einem möglichst hohen Eisenanteil und einem geringen Anteil an Legierungselementen verwendet.

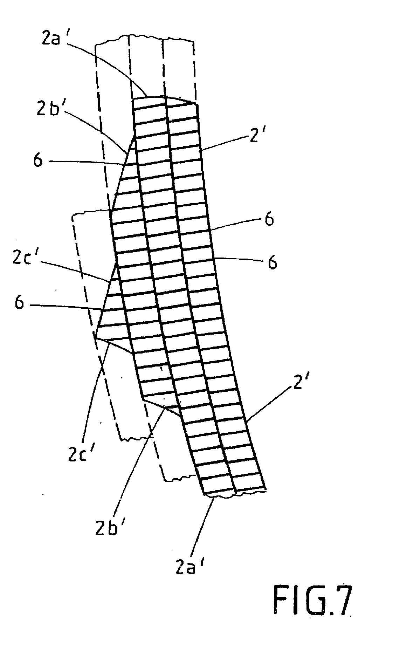

Die Aufnahmeelemente 12 können wie dies in Fig. 7 durch die darin eingesetzten Halteelemente 6 angedeutet ist, leicht schräg mit einer Steigung von 6° - 20° geneigt ausgerichtet sein. Auch können die Aufnahmeelemente 12 schienenförmig ausgebildet sein.

Die Dimensionierung von Rückschlussring 5a, den Magnetsegmenten 3, 3' und den Einzelpermanentmagneten 4, 4' ist so aufeinander abgestimmt, dass sich um den Innenumfang des Rückschlussringes 5a herum gleichmäßig verteilt eine gerade Anzahl an Magnetsegmenten 3, 3' ergibt, wobei sich dann jeweils Magnetsegmente 3, 3' mit gleich oder identisch ausgerichteter Polarität jeweils diametral gegenüberliegen. Beim Zusammenbau wird nun so vorgegangen, dass zwischen den einzelnen Halteelementen 6 zunächst die Magnetsegmente 3 mit gleicher Polaritätsausrichtung innenseitig am Rückschlussring 5a angeordnet werden und anschließend erst in die dann bestehenden Zwischenräume die Magnetsegmente 3' mit der entgegengesetzt ausgerichteten Polarität eingeschoben werden. Hierbei bilden die Halteelemente 6 zwischen jeweils aneinanderliegenden Einzelpermanentmagneten 4, 4' Trennwände und Führungsschienen aus, so dass sowohl bei sich abstoßender gleich ausgerichteter Polarität als auch bei sich anziehender Polarität ein jeweiliger Einzelpermanentmagnet 4, 4' sicher zwischen zwei Halteelementen 6 geführt in axialer Richtung des Rückschlussringes 5a in seine jeweils vorgesehene Position eingeschoben werden kann.

Der Rückschlussring 5a ist dünnwandig ausgebildet und aus einzelnen Blechsegmenten 16 zusammengesetzt.

Mehrere der aus jeweils einem Rückschlussring 5a mit darin eingesetzten Einzelpermanentmagneten 4, 4' bestehenden Magnetringen 2, 2', 2a - 2j, 2a', 2b', 2c' werden entsprechend der jeweils gewünschten und vorgesehenen Leistung des damit ausgestatteten Generators oder Polrades zu einem Magnetrad 10 zusammengesetzt. Hierzu werden die einzelnen Magnetringe 2, 2', 2a' - 2c', 2a - 2j in axialer Richtung des Magnetrades 10 Stück für Stück seitlich aneinandergesetzt, bis die gewünschte Anzahl an Magnetringen vorhanden ist. Bei dem in Fig. 9 dargestellten, mit einem Magnetrad 10 ausgestatteten Polradgehäuse 11 sind elf Magnetringe 2 - 2j zur Ausbildung des Magnetrades 10 aneinandergereiht. In der Zusammenbauposition der einzelnen Magnetringe zu dem Magnetrad 10 liegen dabei zumindest bereichsweise gleichpolige Magnetsegmente 3, 3' und somit sich abstoßende Pole der Einzelpermanentmagnete 4, 4' in axialer Richtung des Magnetrades 10 aneinander. Während des Zusammenbaus des Magnetrads 10 kommt es daher infolge der gleichpolig aneinanderliegenden Magnetsegmente 3, 3' zueinander benachbarter Magnetringe 2, 2', 2a - 2 j, 2a' - 2c' zu einer abstoßenden Kraftwirkung in axialer Richtung, d.h. in Richtung parallel zur Magnetringachse oder Magnetradachse. Hierbei weisen die jeweils aneinanderliegenden Magnetringe zusätzlich infolge der Magnetkräfte der Magnetsegmente 3, 3' mit gleicher Polarität oder gleicher Polaritätsausrichtung das Bestreben auf, sich auf eine stabile Nord-Süd-Position auszurichten, d.h. sich relativ zueinander so weit zu verdrehen, dass jeweils sich anziehende Magnetsegmente 3, 3' ungleicher Polaritätsausrichtung aneinanderliegen. Damit dies nicht möglich ist, müssen die Magnetringe 2, 2', 2a' - 2c', 2a - 2j während ihres Zusammenbaus zu einem Magnetrad 10 geführt und in ihrer relativen Position zueinander gehalten werden. Zu diesem Zweck sind in jedem Rückschlussring 5a eines jeweiligen Magnetringes mehrere Führungslöcher 7 in jeder der beiden Seitenflächen 8a, 8b gleichmäßig entlang des Umfangs ausgebildet. Die Führungslöcher 7 können entweder in regelmäßigen oder in unregelmäßigen Winkelabständen entlang des Umfangs in der jeweiligen Seitenfläche 8a, 8b ausgebildet sein. Wichtig ist nur, dass die in im Einbauzustand benachbart zueinander angeordneten Magnetringen 2 ausgebildeten Führungslöcher 7 in der Zusammenbauposition der jeweiligen Magnetringe zueinander korrespondierend, d.h. fluchtend oder mit einem durch ein Führungselement 9 überbrückten Versatz zueinander, ausgerichtet oder ausrichtbar sind. In ein jeweiliges Führungsloch 7, bei dem es sich auch um eine Sackbohrung handeln kann, wird beim Zusammenbau des Magnetrads 10 jeweils ein stangen- oder stabförmiges Führungselement 9 mit seinem ersten Führungsabschnitt 9a eingesetzt. Ein zweiter Führungsabschnitt 9b des Führungselements 9 steht dann aus diesem Führungsloch 7 des Magnetringes 2 hervor und dient der Führung eines auf den jeweiligen Magnetring aufzustapelnden weiteren Magnetringes. Dazu wird der zweite Führungsabschnitt 9b in ein zu dem Führungsloch 7 korrespondierendes Führungsloch 7 des aufzustapelnden Magnetringes, beispielsweise des Magnetringes 2a, eingesetzt, so dass der aufzustapelnde Magnetring 2a ausgerichtet gegen den Magnetring 2 gedrückt werden kann, ohne das infolge der wirkenden Magnetkräfte eine Verdrehung beider Magnetringe 2, 2a zueinander eintritt. Somit sind zueinander benachbarte Magnetringe, beispielsweise die Magnetringe 2 und 2a, mittels der Führungselemente 9 aufschichtbar und zueinander ausrichtbar.

Die Befestigung der zueinander benachbarten Magnetringe 2, 2', 2a' - 2c', 2a - 2j erfolgt dabei mittels einer stoffschlüssigen Verbindung an den entsprechenden Seitenflächen 8a, 8b, die die Seitenflächen des Rückschlussringes 5a und der Einzelpermanentmagnete 4, 4' umfassen. Zu diesem Zweck wird vor dem Aufstapeln der einzelnen Magnetringe zumindest eine der aneinander angrenzenden Seitenflächen 8a oder 8b eines Magnetringes mit einem anaerob härtenden Klebemittel beschichtet, der die stoffschlüssige Verbindung zu dem daran anliegenden Magnetring 2, 2' ausbildet. Das Klebemittel ist ein anaerob härtendes Klebemittel in Form eines Einkomponentenklebstoffs, der unter Sauerstoffausschluss aushärtet. Die im Klebemittel enthaltene Härterkomponente bleibt inaktiv, solange sie mit dem Sauerstoff der Luft in Berührung steht. Sobald das Klebemittel vom Sauerstoff abgeschlossen wird, was bei dem Aufeinanderstapeln und anschließenden Aufeinanderpressen von aneinanderliegenden Seitenflächen 8a, 8b zweier Magnetringe der Fall ist, erfolgt die Aushärtung sehr schnell, insbesondere bei gleichzeitigem Metallkontakt. Durch die Kapillarwirkung des flüssigen Klebemittels werden sogar die kleinsten Zwischenräume im Fügebereich ausgefüllt. Das ausgehärtete Klebemittel ist danach in den Rauhtiefen der zu verbindenden Seitenflächen 8a, 8b der zueinander benachbarten Magnetringe verankert. Der Aushärtungsvorgang wird durch den Kontakt des Klebemittels mit den Metalloberflächen der beiden Seitenflächen 8a, 8b der zueinander benachbarten Metallringe initiiert, so dass die Metalloberflächen demnach als Katalysator wirken.

Für den Fall, dass die Seitenflächen 8a, 8b der Magnetringe aus einem nichtmetallischen Material, also einem für die Verklebung passiven Material, bestehen, kann vor dem Beschichten mit dem anaerob härtenden Klebemittel ein Aktivator auf zumindest eine der beiden angrenzend zueinander angeordneten Seitenflächen 8a, 8b der miteinander zu verbindenden Magnetringe aufgebracht werden. Die Aufbringung eines Aktivators empfiehlt sich deshalb, weil solche passiven Materialien nur eine geringe oder überhaupt keine katalytische Wirkung besitzen, die für das Aushärten des anaeroben Klebemittels notwendig ist. Auch bei Metallen mit hohen passiven Eigenschaften, wie zum Beispiel Chrom und Edelstahl, empfiehlt sich der Einsatz eines Aktivators, um Fehlklebungen zu vermeiden. Eine Verklebung dieser Art dichtet zusätzlich die Verbindungsstelle gegen korrosive Medien ab. Darüber hinaus weist ein solches anaerob härtendes Klebemittel eine gute Beständigkeit gegenüber mechanischen Schwingungen und eine gute Beständigkeit bei dynamischen Dauerlasten auf.

Bei Verwendung eines anaerob härtenden Klebemittels mit oder ohne Aktivator ist gewährleistet, dass der Härteprozess der Verbindung zwischen den jeweiligen Magnetringen erst nach Kontakt zweier Magnetringe einsetzt.

Bei dem vorstehend beschriebenen Ausführungsbeispiel sind die in den Seitenflächen 8a, 8b eines jeweiligen Magnetringes 2, 2', 2a - 2j, 2a' - 2c' ausgebildeten Führungslöcher 7 bei allen Magnetringen an gleicher Umfangsposition in Bezug zu den rund um den Umfang eines Magnetringes angeordneten Magnetsegmenten 3, 3' ausgebildet. Dadurch entsteht dann ein aus mehreren Magnetringen geschichtetes oder gestapeltes Magnetrad 10 mit parallel zur Magnetringachse oder Magnetradachse oder Magnetsystemachse angeordneten Magnetsegmenten 3, 3', wobei Magnetsegmente gleicher Polaritätsausrichtung in Linie aneinandergereiht sind. Die Halteelemente 6 bilden folglich eine von Einzelpermanentmagnet 4, 4' zu Einzelpermanentmagnet 4, 4' aneinander anliegender Magnetringe gerade und parallel zur Magnetradlängsachse verlaufende Linie aus, wie dies für ein aus elf Magnetringen 2 - 2j bestehendes Magnetrad 10 des Magnetsystems 1 in Fig. 9 dargestellt ist.

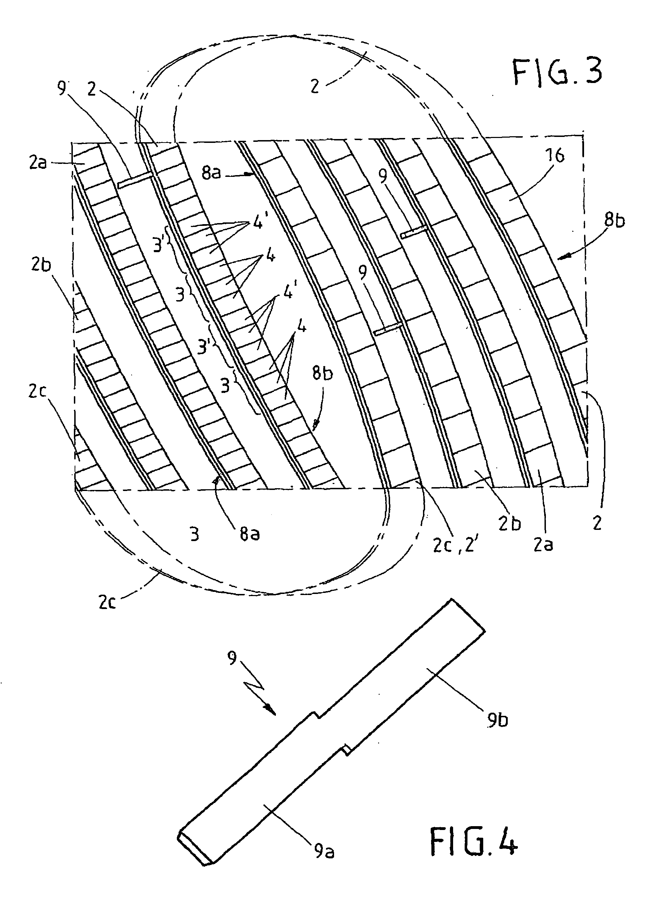

Um ein Magnetradsystem 10 mit räumlich gekrümmten und schräg zur Magnetradachse verlaufenden Magnetsegmenten 3, 3' bereitzustellen, wie dies in Fig. 7 schematisch dargestellt ist, ist in einem zweiten Ausführungsbeispiel vorgesehen, dass der zweite Führungsabschnitt 9b zu dem ersten Führurigsabschnitt 9a des jeweiligen Führungselements 9 in Umfangsrichtung der jeweiligen Magnetringe seitlich versetzt ausgebildet ist. Ein solches Führungselement 9 ist in Fig. 4 dargestellt. Dabei ist der Versatz zwischen dem ersten Führungsabschnitt 9a und dem zweiten Führungsabschnitt 9b des Führungselements 9 derart ausgebildet, dass in der Zusammenbauposition eines Magnetrades 10 die Magnetsegmente 3, 3' und/oder die Einzelpermanentmagnete 4, 4' der einzelnen Magnetringe in Richtung der Magnetringachse in axialer Richtung von Magnetring zu Magnetring jeweils gegeneinander versetzt angeordnet sind. Hierbei kann der Versatz zwischen dem ersten Führungsabschnitt 9a und dem zweiten Führungsabschnitt 9b des jeweiligen Führungselements 9 derart ausgebildet sein, dass in der Zusammenbauposition des Magnetrades 10 die aneinander zugeordneten Magnetsegmente 3, 3' gleicher Polaritätsausrichtung der einzelnen Magnetringe in Bezug auf die Magnetringachse in axialer Richtung treppenförmig versetzt angeordnet sind. Ob die zwischen den Einzelpermanentmagneten 4, 4' durch die Halteelemente 6 gebildete Trennungslinie parallel oder schräg, insbesondere unter einem Winkel von 6° - 20° zur Magnetradachse oder Magnetringachse, verläuft, wird dabei von der dies bestimmenden Ausrichtung der Aufnahmeelemente 12 bestimmt. Der Versatz zwischen dem ersten Führungsabschnitt 9a und dem zweiten Führungsabschnitt 9b des Führungselements 9 in Umfangsrichtung der Magnetringe kann hierbei im Wesentlichen kleiner als ein Kreisabschnitt eines jeweiligen Magnetsegments 3 sein. Alternativ ist es aber auch möglich, die nutenförmigen Schlitze 12 schräg geneigt auszubilden und durch entsprechende geometrische Ausbildung der Einzelpermanentmagnete 4, 4' eine entsprechend schräg ausgerichtete Anordnung der Einzelpermanentmagnete 4, 4' zu erhalten.

Ein Magnetrad 10 mit räumlich gekrümmten und schräg zur Magnetsystemachse verlaufenden Seitenkanten/Seitenflächen der Magnetsegmente 3, 3' kann auch mit einem stabförmigen Führungselement 9 ohne versetzte erste und zweite Führungsabschnitte 9a, 9b bereitgestellt werden, in dem gemäß eines weiteren Ausführungsbeispiels die in einander zugeordneten Seitenflächen 8a, 8b eines jeweiligen Magnetringes ausgebildeten Führungslöcher 7 in Bezug zu den rund um den Umfang der Magnetringe jeweils angeordneten Magnetsegmenten 3 versetzt ausgebildet sind, d.h. auf jeder der beiden Seitenflächen 8a, 8b eine andere Relativposition zu den Aufnahmeelementen 12 aufweisen. Der Versatz zwischen den Führungslöchern 7 in den einander zugewandten Seitenflächen 8a, 8b benachbarten Magnetringe kann wiederum derart ausgebildet sein, dass in der Zusammenbauposition des Magnetrades 10 die Magnetsegmente 3, 3' mit gleicher Polaritätsausrichtung von Magnetring zu Magnetring in Bezug auf die Magnetringachse in axialer Richtung unter einem Winkel von 6° bis 20° im Wesentlichen schräg verlaufend angeordnet sind. Alternativ ist es aber auch wiederum denkbar, dass der Versatz zwischen den Führungslöchern 7 jeweils benachbarter Magnetringe derart ausgebildet ist, dass in Zusammenbauposition des Magnetrades 10 die Magnetsegmente 3, 3' gleicher Polaritätsausrichtung von Magnetring zu Magnetring in Bezug auf die Magnetringachse in axialer Richtung treppenförmig versetzt angeordnet sind. Der Versatz zwischen den Führungslöchern 7 benachbarter Magnetringe in Umfangsrichtung der Magnetringe kann im Wesentlichen kleiner als ein Kreisabschnitt eines jeweiligen Magnetsegments sein.

Insgesamt bestehen somit zur Ausrichtung der Einzelpermanentmagnete 4, 4' und der Magnetsegmente 3, 3' sowohl jeweils in einem einzelnen Magnetring als auch in ihrer Ausrichtung von Magnetring zu Magnetring bei zu einem Magnetrad 10 zusammengefügten Magnetringen verschiedene konstruktive Möglichkeiten. Um die Einzelpermanentmagnete 4, 4' auf dem jeweiligen Träger 5 senkrecht zum Seitenrand des ringförmigen Trägers 5 oder parallel zur Magnetringachse auszurichten, besteht die Möglichkeit, die Aufnahmeelemente 12 und damit die darin geführten und gehaltenen Halteelemente 6 entsprechend auszurichten. Zwischen zwei Halteelemente 6 können dann rechteckige, quaderförmige Einzelpermanentmagnete 4, 4' von der Seite eingeschoben werden. Wenn beabsichtigt ist, schräg geneigt angeordnete Einzelmagnetsegmente 4, 4' auf einem Träger 5 anzuordnen, so kann dies dadurch geschehen, dass die Aufnahmeelemente 12 des Trägers 5 und folglich die darin oder daran angeordneten Halteelemente 6 mit einer entsprechenden Neigung von 6° - 20° in Bezug auf die durch den Magnetringmittelpunkt verlaufende Magnetringachse oder Magnetradachse ausgebildet und angeordnet werden. Zwischen zwei Halteelementen 6 lässt sich dann ein in der Aufsicht parallelogrammförmiger Quader eines Einzelpermanentmagneten 4, 4' anordnen. Bei aneinanderliegenden Magnetringen lässt sich die Relativposition der Einzelpermanentmagnete 4, 4' zueinander von Magnetring zu Magnetring durch die entsprechende Ausbildung der Führungslöcher 7 in den jeweiligen Seitenflächen 8a, 8b sowie die Ausgestaltung der Führungselemente 9 variierbar festlegen. So ist es möglich, dass die Einzelpermanentmagnete 4, 4' von Magnetring zu Magnetring jeweils versetzt zueinander angeordnet sind und die Halteelemente 6 ebenfalls einen stufenförmigen Versatz von Magnetring zu Magnetring aufweisen. Es ist aber auch möglich, die Einzelmagnetsegmente 4, 4' linienförmig in einer Reihe zueinander anzuordnen, so dass die aneinandergereihten Halteelemente 6 dann im Magnetrad 10 eine durchgehende Linie ausbilden, die schräg geneigt, mit einem Winkel von 6° - 20° oder aber auch gerade, d.h. parallel zur durch den Magneträdmittelpunkt verlaufenden Magnetradachse, ausgerichtet sind.

Die vorstehend beschriebenen Ausführungsbeispiele beziehen sich auf ein Magnetsystem 1 eines Außenläufers. Der Fachmann wird aber erkennen, dass mittels leichter Modifikation die vorstehend beschriebenen Merkmale auch auf einen Innenläufer, insbesondere einen Innenläufer eines Generators einer Windenergieanlage, übertragbar sind, wobei dann der Rückschlussring nicht mehr den Außenumfang, sondern den Innenumfang eines Magnetringes abschirmt und zu diesem Zweck im Wesentlichen auf dem Innenumfang eines jeweiligen Magnetringes ausgebildet ist.

Zur Erhöhung der magnetischen Polfühligkeit, die in Kombination mit einem genuteten Anker einer Maschine entsteht, muss ein Ankerblechpaket so geschichtet werden, dass die Nuten schräg zur Mittelachse stehen. Das erschwert die Verwendung von Wicklungen aus Rahmenspulen, die zur Maximierung der Ausnutzung der Maschine notwendig sind. Um einen ungeschrägten Anker verwenden zu können, muss aber das Magnetsystem 1 oder ein Magnetrad 10 geschrägt sein, was bei Verwendung einfacher rechteckiger Magnetsegmente 3, 3' nicht möglich ist. Der gleiche Effekt lässt sich aber erzielen, wenn statt gerader Führungselemente 9 Sprünge oder Stufen aufweisende Führungselemente oder solche mit versetzten Führungsabschnitten 9a, 9b verwendet werden, wie dies in Fig. 4 dargestellt ist. So entsteht ein Magnetsystem 1 mit treppenförmig versetzten Magnetringen 2', 2a' - 2c' was elektrisch der Schrägung gleich kommt und in Fig. 7 schematisch dargestellt ist.

Insgesamt wird durch die Erfindung ein ein Polrad 13 umfassendes Magnetsystem 1 vom Typ eines Außenläufers bereitgestellt, das ein aus einzelnen Magnetringen 2, 2', 2a, 2b, 2c, 2d, 2e, 2f, 2g, 2h, 2i, 2j, 2a' - 2c' mit mehreren magnetisierten Magnetsegmenten 3, 3' abwechselnder Polarität aufgebautes Magnetrad 10 umfasst und das bei einem Generator einer Windenergieanlage verwendet werden kann.

Auch wenn das beschriebe Magnetsystem Ähnlichkeiten mit an sich bekannten Vorrichtungen aufweisen mag, so ist es hier besonders bedeutsam, dass ein derartiges Magnetsystem auch im Bereich von hoch belasteten Bauteilen einer Windenergieanlagen zur Anwendung kommt und dabei mit Erfolg verwendet werden kann.

Das das Polradgehäuse 11 mit darin eingesetztem Magnetrad 10 umfassende Magnetsystem 1 besteht somit aus einzelnen, aufgrund der Verbindung mittels eines Klebstoffes ggf. gegeneinander elektrisch isolierten Magnetringen, die entsprechend der axialen Gesamtlänge des Magnetrades 10 zu einem Paket aufgestapelt werden und einen dünnwandigen Rückschlussring 5a zur Führung der Magnetfeldlinien und zur Abschirmung nach außen bilden. Das Paket erhält seine mechanische Festigkeit auch mittels Halterungen oder Streben oder Führungselementen 9, die vorzugsweise in magnetisch unbelasteten Zonen eingeschweißt werden.

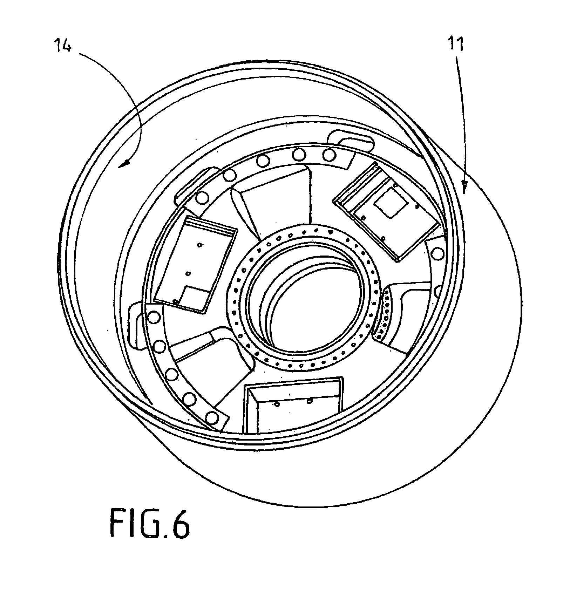

Das aus mehreren Magnetringen bestehende ringförmige Magnetrad 10 wird bei der Herstellung des Polrades 13 mit dem in Figur 6 dargestellten Polradgehäuse 11 verbunden, wobei das Magnetrad 10 in dem Polradgehäuse 11 innen liegend angebracht wird. Das Polradgehäuse 11 kann aus Gründen der Gewichtseinsparung aus einem magnetisch unwirksamen Material bestehen. Im Innenumfang des Polradgehäuses 11 ist eine Aufnahmefläche 14 ausgebildet. Die Aufnahmefläche 14 kann beispielsweise eine minimale Vertiefung oder Auskehlung sein, die an die geometrische Abmessung des Magnetrades 10 zur Ausbildung einer Verbindung mit dem Polradgehäuse 11 angepasst ist.

Zur Herstellung des Polrades wird - in einem ersten Schritt - das Polradgehäuse 11 leicht erwärmt, um das Polradgehäuse 11 und das Magnetrad 10 fügen zu können. Das Polradgehäuse 11 wird auf eine Temperatur erwärmt, bei der sich der Innendurchmesser des Polradgehäuses 11, insbesondere der Durchmesser der Aufnahmefläche 14, auf einen Durchmesser ausdehnt, der größer als der Außendurchmesser des Magnetrades 10 ist.

In einem dem Erwärmen des Polradgehäuses 11 folgenden Schritt wird dann das Magnetrad 10 in der oder an der in der Innenumfangsfläche des Polradgehäuses 11 ausgebildeten Aufnahmefläche 14 angeordnet.

In einem darauf folgenden Schritt wird das Polradgehäuse 11 abgekühlt oder man lässt das Polradgehäuse abkühlen, so dass das Polradgehäuse 11 auf das Magnetrad 10 aufschrumpft. Dem Aufschrumpfen liegt somit das Prinzip der Wärmeausdehnung zugrunde, bei dem die miteinander zu verbindenden beiden Teile nicht passgenau, sondern das Polradgehäuse 11 geringfügig zu klein oder das Magnetrad 10 geringfügig zu groß angefertigt sind, so dass beide Teile bei Normaltemperatur, d.h. in der Regel Raum- oder Umgebungstemperatur, nicht miteinander verbunden werden können. Durch Erwärmung dehnt sich der jeweils erwärmte Gegenstand aus und schrumpft anschließend wieder bei Abkühlung. So schrumpft das Polradgehäuse 11 bei seiner Abkühlung und wird auf das Magnetrad 10 gepresst. Das Abkühlen des Polradgehäuses 11 kann beispielsweise bei Umgebungstemperatur stattfinden.

In einem Schritt des Verfahrens wird die Außenumfangsfläche des Magnetrades 10, d.h. die Außenseite des Rückschlussringes 5a, mit einem Klebemittel 15 beschichtet. Alternativ kann aber auch die Aufnahmefläche 14 des Polradgehäuses 11 mit einem Klebemittel beschichtet werden. Denkbar ist es ferner auch, sowohl die Außenumfangsfläche des Magnetrades 10 als auch die Aufnahmefläche 4 des Polradgehäuses 11 mit einem Klebemittel zu beschichten. Das Beschichten der Außenumfangsfläche des Magnetrads 10 oder der Aufnahmefläche 4 des Polradgehäuses 11 oder beider Flächen gemeinsam kann dabei zu den verschiedensten Zeitpunkten während der Durchführung des Fügeverfahrens zur Verbindung dieser beiden Bauteile durchgeführt werden. Beispielsweise kann das Beschichten vor dem Erwärmen des Polradgehäuses 11, vor dem Anordnen des Magnetrades 10 oder vor dem Abkühlen des Polradgehäuses 11 erfolgen.

Das beim Beschichten verwendete Klebemittel ist ebenfalls ein anaerob härtendes Klebemittel in Form eines Einkomponentenklebstoffs, der unter Sauerstoffausschluss bei Raumtemperatur aushärtet. Die im flüssigen Klebemittel enthaltene Härterkomponente bleibt inaktiv, solange sie mit dem Sauerstoff der Luft in Berührung steht. Sobald das Klebemittel 15 vom Sauerstoff abgeschlossen wird, was bei dem Fügen oder Aufschrumpfen des Polradgehäuses 11 auf das Magnetrad 10 der Fall ist, erfolgt die Aushärtung sehr schnell, insbesondere bei gleichzeitigem Metallkontakt. Durch die kapillare Wirkung des flüssigen Klebemittels 15 werden sogar kleinste Zwischenräume im Fügebereich ausgefüllt. Das ausgehärtete Klebemittel ist danach in den Rauhtiefen der zu verbindenden Teile verankert. Der Aushärtungsvorgang wird durch den Kontakt des Klebemittels 15 mit den Metalloberflächen von Polradgehäuse 11 und Magnetrad 10 initiiert, so dass diese Metalloberflächen demnach als Katalysator wirken. So können metallische Werkstoffe miteinander verklebt werden.

Für den Fall, dass das Polradgehäuse 11 aus einem nichtmetallischen Material, also einem für die Verklebung zunächst passiven Material, besteht, kann vor dem Beschichten mit dem anaerob härtenden Klebemittel 15 ein Aktivator auf die Aufnahmefläche 14 des Polradgehäuses 11 aufgebracht werden. Sollte die Außenumfangsfläche des Magnetrads 10 eine Schicht eines nichtmetallischen Materials aufweisen, so kann auch diese Fläche mit einem Aktivator beschichtet werden. Die Aufbringung eines Aktivators empfiehlt sich deshalb, weil passive Materialien nur eine geringe oder überhaupt keine katalytische Wirkung besitzen, die für das Aushärten des anaeroben Klebemittels aber notwendig ist. Auch bei Metallen mit hohen passiven Eigenschaften, wie zum Beispiel Chrom und Edelstahl, empfiehlt sich der Einsatz eines Aktivators, um Fehlklebungen zu vermeiden. Eine Verklebung dieser Art dichtet zusätzlich die Verbindungsstelle von Polradgehäuse 11 und Magnetrad 10 gegen korrosive Medien ab. Darüber hinaus weist ein solches anaerob härtendes Klebemittel 15 eine gute Beständigkeit gegenüber mechanischen Schwingungen und eine gute Beständigkeit bei dynamischen Dauerlasten auf.

Unabhängig davon, ob ein Aktivator verwendet wird oder nicht, kann das Verfahren einen zusätzlichen Schritt aufweisen, bei dem vor dem Anordnen des Magnetrades 10 die Außenumfangsfläche des Magnetrades 10, d.h. die Außenfläche des Rückschlussrings 5a, oder die Aufnahmefläche 14 des Polradgehäuses 11 mittels Sand- oder Kugelstrahlens aufgerauht wird. Denkbar ist aber auch, beide Flächen mittels Sand- oder Kugelstrahlens aufzurauhen. Durch diese Maßnahme verbessert sich die Haftung des Klebemittels 15 und die Belastbarkeit der zwischen dem Polradgehäuse 11 und dem aus Rückschlussringen 5a gebildeten Metallrad ausgebildeten Verbindung.

Das vorstehend beschriebene Verfahren kombiniert beim Abkühlen des Polradgehäuses 11 folglich einen Klebevorgang und einen Pressvorgang, die gemeinsam und gleichzeitig ihre Wirkung zur Herstellung der Verbindung von Polradgehäuse 11 und Magnetrad 10 entfalten. Beim Abkühlen des Polradgehäuses 11 umschließt dieses das Magnetrad 10 mit einer leichten Pressung nach Art eines Kraftschlusses, wobei die Klebeverbindung einen Stoffschluss bewirkt. Hierbei kann eine vertieft mit einem Seitenrand ausgebildete Aufnahmefläche 14 auch noch Formschlussanteile beitragen. Jedenfalls wird dadurch dem zwischen der Außenumfangsfläche des Magnetrades 10 und der Aufnahmefläche 14 des Polradgehäuses 11 befindlichen Klebemittel 15 der Kontakt mit Sauerstoff entzogen, womit es aushärten kann und eine hochfeste Verbindung in Form eines Stoffschlusses in der Fuge entsteht. Durch das Abkühlen des Polradgehäuses 11 und das damit verbundene Umschließen des Magnetrades 10 werden die Einzelpermanentmagnete 4, 4' und die einzelnen Magnetsegmente 3, 3' des Magnetrades 10 gegeneinander und/oder gegen die Halteelemente 6 gedrückt. Ebenso werden die einzelnen Metallsegmente 16 des Trägers 5 gegeneinander gepresst oder gedrückt. Alle diese Elemente bilden somit ggf. untereinander zusätzlich eine Verbindung nach Art eines Kraftschlusses aus. Beim Abkühlen des Polradgehäuses 11 und Aufschrumpfen auf das Magnetrad 10 wird somit eine stoffschlüssige Verbindung zwischen dem Polradgehäuse 11 und dem Magnetrad 10 und eine zumindest kraftschlüssige Verbindung zwischen den einzelnen Magnetsegmenten 3, 3' oder den Einzelpermanentmagneten 4, 4' des Magnetrades 10 oder zwischen diesen Elementen und den jeweils anliegenden Halteelementen 6 hergestellt und so zusammen mit dem Polradgehäuse 11 das Magnetsystem 1 ausgebildet.

Um einem Überschuss an verwendetem Klebemittel 15 aus wirtschaftlichen Aspekten zu begegnen, empfiehlt es sich, das aus der zwischen dem Magnetrad 10 und dem Polradgehäuse 11 ausgebildeten Verbindungsfuge austretende Klebemittel 15 abzusaugen und wiederzuverwenden.

Insgesamt wird somit ein Verfahren zur Herstellung eines Polrades 13 vom Typ eines Außenläufers mittels einer "Schrumpfklebeverbindng" bereitgestellt, das stoffschlüssige und kraftschlüssige Verbindungen zwischen dem Polradgehäuse 11 und dem Magnetrad 10 und zwischen den einzelnen Magnetsegmenten 3, 3' und/oder den Einzelpermanentmagneten 4, 4' und den Halteelementen 6 des Magnetrades 10 aufweist. Mittels der "Schrumpfklebeverbindung" ergibt sich eine deutliche Verbesserung gegen auftretende Scherkräfte und Biegemomente, wobei die verbundenen Bauteile auf der gesamten Länge fast unlösbar miteinander verbunden sind.

Ein nach diesem Verfahren hergestelltes Polrad 13 vom Typ eines Außenläufers mit einem Magnetrad 10 mit mehreren magnetisierten Magnetsegmenten 3, 3' abwechselnder Polaritätsausrichtung und einem Polradgehäuse 11 kann bei einem Generator einer Windenergieanlage Verwendung finden.

Auch wenn das beschriebe Verfahren Ähnlichkeiten mit an sich bekannten Verfahren aufweisen mag, so ist es hier besonders bedeutsam, dass ein derartiges Verfahren zur Herstellung einer Klebe- und Schrumpfverbindung auch im Bereich von hoch belasteten Bauteilen einer Windenergieanlagen zur Anwendung kommen und dabei mit Erfolg verwendet werden kann.

## Patentansprüche

1. Magnetsystem (1) eines vielpoligen Generators einer Windenergieanlage oder Windkraftanlage umfassend einen Magnetring (2, 2', 2a - 2j, 2a' - 2c') mit einem Träger (5) auf dessen Außenumfang oder Innenumfang aneinandergereiht Einzelpermanentmagnete (4, 4') in sich regelmäßig ändernder Polaritätsausrichtung angeordnet sind, wobei
mehrere Magnetringe (2, 2', 2a - 2j, 2a' - 2c') seitlich in axialer Richtung koaxial aneinander anliegend zu einem Magnetrad (10) zusammengefügt sind,
**dadurch gekennzeichnet, dass** der Träger (5) in jeder seiner beiden Seitenflächen (8a, 8b) in regelmäßigen oder unregelmäßigen Winkelabständen entlang seines Umfangs oder die Halteelemente (6) Führungslöcher (7) oder Führungsbohrungen aufweist/aufweisen, in die jeweils ein Führungselement (9) mit einem ersten Führungsabschnitt (9a) eingesetzt ist, wobei ein zweiter Führungsabschnitt (9b) des jeweiligen Führungselements (9) in ein korrespondierendes Führungsloch (7) oder eine des Tröjers (5) oder der Halteelementen (6) Führungsbohrung eines benachbarten Magnetringes (2', 2a' - 2b', 2a - 2j) eingesetzt ist.

2. Magnetsystem (1) nach Anspruch 1, **dadurch gekennzeichnet, dass** benachbarte Magnetringe (2, 2', 2a' - 2c', 2a - 2j) mittels einer stoffschlüssigen Verbindung an ihren aneinanderliegenden Seitenflächen (8a, 8b) miteinander verbunden sind, wobei sich die stoffschlüssige Verbindung beim Aufeinanderpressen zueinander benachbarter Magnetringe (2, 2', 2a' - 2c', 2a - 2j) aus einem anaerob härtenden Klebemittel bildet.

3. Magnetsystem (1) nach Anspruch 2, **dadurch gekennzeichnet, dass** sich die stoffschlüssige Verbindung beim Aufeinanderpressen benachbarter Magnetringe (2, 2', 2a' - 2c', 2a - 2j) aus einem anaerob härtenden Klebemittel und einem Aktivator bildet.

4. Magnetsystem (1) nach einem der vorhergehenden Ansprüche, **dadurch gekennzeichnet, dass** die Führungslöcher oder - bohrungen (7) bei allen Magnetringen (2, 2', 2a' - 2c', 2a - 2j) oder Trägern (5) oder Rückschlussringen (5a) an gleicher Umfangsposition oder Winkelposition in Bezug zu längs des Umfangs angeordneten Einzelpermanentmagneten (4, 4') und/oder Magnetsegmenten (3, 3') ausgebildet sind.

5. Magnetsystem (1) nach einem der vorhergehenden Ansprüche, **dadurch gekennzeichnet, dass** der zweite Führungsabschnitt (9b) der Führungselemente (9) seitlich versetzt zu dem ersten Führungsabschnitt (9a) ausgebildet ist.

6. Magnetsystem (1) nach einem der vorhergehenden Ansprüche, **dadurch gekennzeichnet, dass** der Versatz zwischen dem ersten Führungsabschnitt (9a) und dem zweiten Führungsabschnitt (9b) derart ausgebildet ist, dass in der Zusammenbauposition des Magnetrades (10) die Einzelpermanentmagnete (4, 4') und/oder die Magnetsegmente (3, 3') gleicher Polaritätsausrichtung in Bezug auf die Magnetradachse in axialer Richtung von Magnetring (2) zu Magnetring (2', 2a' - 2c', 2a - 2j) unter einem Winkel von 6° bis 20° im Wesentlichen schräg verlaufend oder treppenförmig versetzt angeordnet sind.

7. Magnetsystem (1) nach Anspruch 6, **dadurch gekennzeichnet, dass** der seitliche Versatz zwischen dem ersten Führungsabschnitt (9a) und dem zweiten Führungsabschnitt (9b) der Führungselemente (9) im Wesentlichen kleiner ist als ein jeweils von einem Magnetsegment (3, 3') überstrichener Kreisringabschnitt.

8. Magnetsystem (1) nach einem der vorhergehenden Ansprüche, **dadurch gekennzeichnet, dass** das Magnetrad (10) aus mehreren, aneinanderliegend aufgeschichteten und mittels der Führungselemente (9) zueinander ausgerichteten Magnetringen (2, 2a - 2j, 2', 2a' - 2c') zusammengesetzt ist.

9. Magnetsystem (1) nach einem der vorhergehenden Ansprüche, **dadurch gekennzeichnet, dass** die Außen- oder die Innenumfangsfläche des Trägers (5) Aufnahmeelemente (12) aufweist, in oder an welchen jeweils ein klammerartiges Halteelement (6) angeordnet ist, wobei jeweils zwei beabstandet zueinander angeordnete Halteelemente (6) zwischen sich einen Einzelpermanentmagneten (4, 4') an dem Träger (5) festhalten und/oder festlegen.

10. Magnetsystem (1) nach Anspruch 9, **dadurch gekennzeichnet, dass** jedes Halteelement (6) benachbarte Einzelpermanentmagnete (4, 4') mechanisch voneinander trennt und deren unmittelbares Aneinanderliegen verhindert.

11. Magnetsystem (1) nach Anspruch 9 oder 10, **dadurch gekennzeichnet, dass** benachbarte Halteelemente (6) derart beabstandet angeordnet und die Einzelpermanentmagnete (4, 4') derart dimensioniert sind, dass jeweils ein Einzelpermanentmagnet (4, 4') seitlich in Axialrichtung des Trägers in den zwischen benachbarten Halteelementen (6) ausgebildeten Zwischenraum einschiebbar ist.

12. Magnetsystem (1) nach einem der Ansprüche 9 - 11, **dadurch gekennzeichnet, dass** jeweils mehrere gleichpolig ausgerichtete, nebeneinander angeordnete Einzelpermanentmagnete (4, 4') ein Magnetsegment (3, 3') ausbilden.

13. Magnetsystem (1) nach einem der Ansprüche 9 - 12, **dadurch gekennzeichnet, dass** der Träger (5) einen Rückschlussring (5a) ausbildet.

14. Magnetsystem (1) nach einem der Ansprüche 9 - 13, **dadurch gekennzeichnet, dass** die Einzelpermanentmagnete (4, 4') aus einem Metall der Seltenen Erden hergestellt sind.

15. Magnetsystem (1) nach einem der Ansprüche 9 - 14, **dadurch gekennzeichnet, dass** die Aufnahmeelemente (12) schräg geneigt verlaufend, insbesondere unter einem Winkel von 6° - 20°, ausgebildet sind.

16. Magnetsystem (1) nach einem der vorhergehenden Ansprüche, **dadurch gekennzeichnet, dass** das Magnetrad (10) mittels einer Schrumpf-Klebe-Verbindung stoff- und/oder kraftschlüssig längs einer umlaufenden Aufnahmefläche (14) mit einem Polradgehäuse (11) verbunden ist.

## Claims

1. Magnet system (1) of a multipolar generator of a wind turbine, comprising a magnet ring (2, 2', 2a-2j, 2a'-2c') having a support (5) on the outer circumference or inner circumference of which individual permanent magnets (4, 4') are arranged one after the other with regularly changing polarity alignment, a plurality of magnet rings (2, 2', 2a-2j, 2a'-2c') being laterally joined together so as to be coaxially contiguous in the axial direction with respect to a magnet wheel (10), **characterised in that**, with regular or irregular angular spacing along the circumference thereof, each of the two lateral faces (8a, 8b) of the support (5) or the retaining elements (6) has/have guide holes (7) or guide bores, into each of which a guide element (9) having a first guide portion (9a) is inserted, a second guide portion (9b) of said guide element (9) being inserted into a corresponding guide hole (7) or a guide bore of the support (5) or of the retaining elements (6) of an adjacent magnet ring (2', 2a'-2b', 2a-2j).

2. Magnet system (1) according to claim 1, **characterised in that** adjacent magnet rings (2, 2', 2a'-2c', 2a-2j) are interconnected by means of an integral connection at the contiguous lateral faces (8a, 8b) thereof, the integral connection being formed from an anaerobically curing adhesive when mutually adjacent magnet rings (2, 2', 2a'-2c', 2a-2j) are pressed against one another.

3. Magnet system (1) according to claim 2, **characterised in that** the integral connection is formed from an anaerobically curing adhesive and an activator when adjacent magnet rings (2, 2', 2a'-2c', 2a-2j) are pressed against one another.

4. Magnet system (1) according to any of the preceding claims, **characterised in that** the guide holes or guide bores (7) in all magnet rings (2, 2', 2a'-2c', 2a-2j) or supports (5) or return-path rings (5a) are formed at the same circumferential position or angular position in relation to individual permanent magnets (4, 4') and/or magnet segments (3, 3') which are arranged along the circumference.

5. Magnet system (1) according to any of the preceding claims, **characterised in that** the second guide portion (9b) of the guide elements (9) is laterally offset with respect to the first guide portion (9a).

6. Magnet system (1) according to any of the preceding claims, **characterised in that** the offset between the first guide portion (9a) and the second guide portion (9b) is formed such that, when the magnet wheel (10) is in the assembled position, the individual permanent magnets (4, 4') and/or the magnet segments (3, 3') having the same polarity alignment are arranged in relation to the magnet wheel axis so as to extend substantially obliquely or to be offset in the form of a staircase at an angle of from 6° to 20° in the axial direction from magnet ring (2) to magnet ring (2', 2a'-2c', 2a-2j).

7. Magnet system (1) according to claim 6, **characterised in that** the lateral offset between the first guide portion (9a) and the second guide portion (9b) of the guide elements (9) is substantially smaller than a circular ring portion which is covered in each case by a magnet segment (3, 3').

8. Magnet system (1) according to any of the preceding claims, **characterised in that** the magnet wheel (10) is composed of a plurality of contiguous magnet rings (2, 2a-2j, 2', 2a'-2c') which are formed in layers and aligned with respect to one another by means of the guide elements (9).

9. Magnet system (1) according to any of the preceding claims, **characterised in that** the outer or inner circumferential face of the support (5) has receiver elements (12), in or at each of which a clamp-like retaining element (6) is arranged, two retaining elements (6), which are spaced apart from one another, in each case holding firmly and/or fixing between them an individual permanent magnet (4, 4') on the support (5).

10. Magnet system (1) according to claim 9, **characterised in that** each retaining element (6) mechanically separates adjacent individual permanent magnets (4, 4') from one another and prevents direct contiguity thereof.

11. Magnet system (1) according to either claim 9 or claim 10, **characterised in that** adjacent retaining elements (6) are spaced apart and the individual permanent magnets (4, 4') are dimensioned such that each individual permanent magnet (4, 4') can be inserted laterally, in the axial direction of the support, into the intermediate space formed between adjacent retaining elements (6).

12. Magnet system (1) according to any of claims 9-11, **characterised in that** each plurality of adjacent individual permanent magnets (4, 4') aligned with the same polarity forms a magnet segment (3, 3').

13. Magnet system (1) according to any of claims 9-12, **characterised in that** the support (5) forms a return-path ring (5a).

14. Magnet system (1) according to any of claims 9-13, **characterised in that** the individual permanent magnets (4, 4') are formed from a rare-earth metal.

15. Magnet system (1) according to any of claims 9-14, **characterised in that** the receiver elements (12) extend in an obliquely inclined manner, in particular at an angle of from 6° to 20°.

16. Magnet system (1) according to any of the preceding claims, **characterised in that** the magnet wheel (10) is connected in an integral and/or non-positive manner by means of a shrink-adhesion joint to a pole wheel housing (11) along a circumferential receiving face (14).

## Revendications

1. Système magnétique (1) d'un alternateur multipolaire d'une centrale éolienne ou d'un éolienne, comprenant un anneau magnétique (2, 2', 2a - 2j, 2a' - 2c') avec un support (5) sur le pourtour extérieur ou le pourtour intérieur duquel sont agencés en alignement les uns contre les autres des aimants permanents individuels (4, 4') selon une orientation de polarité variant régulièrement, dans lequel plusieurs anneaux magnétiques (2, 2', 2a - 2j, 2a' - 2c'), juxtaposés latéralement et coaxialement les uns contre les autres dans la direction axiale, sont réunis pour former une roue magnétique (10),
**caractérisé en ce que** le support (5), dans chacune de ses deux faces latérales (8a, 8b) à des distances angulaires régulières ou irrégulières le long du pourtour, ou les éléments de retenue (6) présente/présentent des trous de guidage (7) ou des alésages de guidage, dans lesquels est respectivement inséré un élément de guidage (9) avec une première partie de guidage (9a), dans lequel une deuxième partie de guidage (9b) de l'élément de guidage (9) respectif est insérée dans un trou de guidage (7) correspondant ou un alésage de guidage du support (5) ou des éléments de retenue (6) d'un anneau magnétique (2', 2a' - 2b', 2a - 2j) avoisinant.

2. Système magnétique (1) selon la revendication 1, **caractérisé en ce que** des anneaux magnétiques (2, 2', 2a' - 2c', 2a - 2j) avoisinants sont reliés entre eux au moyen d'une liaison de matière au niveau de leurs faces latérales (8a, 8b) adjacentes, dans lequel la liaison de matière se forme à partir d'un adhésif anaérobie durcissant lorsque les anneaux magnétiques (2, 2', 2a' - 2c', 2a - 2j) avoisinants sont pressés les uns contre les autres.

3. Système magnétique (1) selon la revendication 2, **caractérisé en ce que** la liaison de matière se forme à partir d'un adhésif anaérobie durcissant et d'un activateur lorsque les anneaux magnétiques (2, 2', 2a' - 2c', 2a - 2j) avoisinants sont pressés les uns contre les autres.

4. Système magnétique (1) selon l'une quelconque des revendications précédentes, **caractérisé en ce que** les trous de guidage ou alésages de guidage (7) pour tous les anneaux magnétiques (2, 2', 2a' - 2c', 2a - 2j) ou supports (5) ou anneaux de reflux (5a) sont formés au niveau d'une même position de pourtour ou position angulaire par rapport à des aimants permanents individuels (4, 4') et/ou des segments magnétiques (3, 3') agencés le long du pourtour.

5. Système magnétique (1) selon l'une quelconque des revendications précédentes, **caractérisé en ce que** la deuxième partie de guidage (9b) des éléments de guidage (9) est réalisée en étant décalée latéralement par rapport à la première partie de guidage (9a).

6. Système magnétique (1) selon l'une quelconque des revendications précédentes, **caractérisé en ce que** le décalage entre la première partie de guidage (9a) et la deuxième partie de guidage (9b) est réalisé de telle sorte que, dans la position assemblée de la roue magnétique (10), les aimants permanents individuels (4, 4') et/ou les segments magnétiques (3, 3') avec la même orientation de polarité sont agencés par rapport à l'axe de la roue magnétique dans la direction axiale d'un anneau magnétique (2) vers un anneau magnétique (2', 2a' - 2c', 2a - 2j) en s'étendant sensiblement en oblique selon un angle de 6° à 20° ou en étant disposés en forme de gradins.

7. Système magnétique (1) selon la revendication 6, **caractérisé en ce que** le décalage latéral entre la première partie de guidage (9a) et la deuxième partie de guidage (9b) des éléments de guidage (9) est sensiblement plus petit qu'une partie de l'anneau circulaire respectivement couverte par un segment magnétique (3, 3').

8. Système magnétique (1) selon l'une quelconque des revendications précédentes, **caractérisé en ce que** la roue magnétique (10) est composée de plusieurs anneaux magnétiques (2, 2a - 2j, 2', 2a' - 2c') superposés de manière juxtaposée et orientés les uns par rapport aux autres au moyen des éléments de guidage (9).

9. Système magnétique (1) selon l'une quelconque des revendications précédentes, **caractérisé en ce que** la surface du pourtour extérieur ou intérieur du support (5) présente des éléments de réception (12), dans ou sur lesquels est respectivement agencé un élément de retenue (6) en forme de pince, dans lequel respectivement deux éléments de retenue (6) agencés à distance l'un de l'autre maintiennent et/ou immobilisent entre eux un aimant permanent individuel (4, 4') sur le support (5).

10. Système magnétique (1) selon la revendication 9, **caractérisé en ce que** chaque élément de retenue (6) sépare mécaniquement les uns des autres des aimants permanents individuels (4, 4') avoisinants et empêche leur juxtaposition directe.

11. Système magnétique (1) selon la revendication 9 ou 10, **caractérisé en ce que** des éléments de retenue (6) avoisinants sont agencés à distance de telle sorte que et les aimants permanents individuels (4, 4') sont dimensionnés de telle sorte que respectivement un aimant permanent individuel (4, 4') peut être enchâssé latéralement dans la direction axiale du support dans l'espace intermédiaire formé entre des éléments de retenue (6) avoisinants.

12. Système magnétique (1) selon l'une quelconque des revendications 9 à 11, **caractérisé en ce que** respectivement plusieurs aimants permanents individuels (4, 4') agencés les uns à côté des autres et orientés de manière homopolaire forment un segment magnétique (3, 3').

13. Système magnétique (1) selon l'une quelconque des revendications 9 à 12, **caractérisé en ce que** le support (5) forme un anneau de reflux (5a).

14. Système magnétique (1) selon l'une quelconque des revendications 9 à 13, **caractérisé en ce que** les aimants permanents individuels (4, 4') sont fabriqués dans un métal de terres rares.

15. Système magnétique (1) selon l'une quelconque des revendications 9 à 14, **caractérisé en ce que** les éléments de réception (12) s'étendent de manière inclinée, en particulier selon un angle de 6° à 20°.

16. Système magnétique (1) selon l'une quelconque des revendications précédentes, **caractérisé en ce que** la roue magnétique (10) est reliée à un carter (11) de roue polaire au moyen d'une liaison de matière et/ou de force le long d'une surface réceptrice (14) périphérique, au moyen d'un assemblage fretté et collé.
